# FASCICULE DE BREVET EUROPEEN

(11) **EP 0 362 007 B1**
(45) Date de publication et mention de la délivrance du brevet: **13.04.1994**
(21) Numéro de dépôt: 89402496.7
(22) Date de dépôt: 13.09.1989
(51) Int. Cl.: B23C 3/35

(54) **Etau universel pour la reproduction des dents de clés plates**
Universalspannklotz zum Kopieren von Flachschlüsseln
Universal clamp for the reproduction of flat keys

(30) Priorité: 30.09.1988 FR 8812808
(43) Date de publication de la demande: 04.04.1990
(73) Titulaire: HK INDUSTRIES S.A., F-75528 Paris Cédex 11 (FR)
(72) Inventeur: Kinas, Jérôme, F-92200 Neuilly (FR)
(74) Mandataire: Pinguet, André

(56) Documents cités:
- EP-A- 0 193 859
- FR-A- 2 620 066
- US-A- 3 807 276

## Description

La présente invention a trait à un étau permettant d'assujettir toute une variété de clés plates ainsi qu'à son utilisation en vue de créer ou de copier les dents de leur panneton.

A l'heure actuelle, les modèles de clés plates mises sur le marché sont de plus en plus nombreux. Leurs pannetons admettent des sections de formes diverses : simple rectangle aplati avec une tranche effilée, croix ou té, cylindre ou lignes brisées.... Pour les assujettir convenablement à un support fixe en vue de leur usinage, il convient donc de disposer d'étaux dont les mâchoires sont adaptées à ces différentes formes. Bien souvent, des étaux standards sont utilisés auxquels une ou plusieurs pièces sont ajoutées afin de les rendre compatibles avec la clé à travailler.

Or, par ailleurs, se développent des petites échoppes qui proposent de copier des clés dans des délais très courts. Pour elles, le recours aux étaux habituels présente plusieurs inconvénients liés à ces pièces complémentaires d'adaptation. Il faut en effet les disposer sur l'étau à chaque changement de type de clés. D'où une perte de temps d'autant plus importante que les clés apportées par chacun des clients sont variées. Egalement en raison de cette diversité des modèles, de nombreuses pièces d'adaptation sont manipulées, ce qui accroît le risque de les égarer, ou tout au moins le temps nécessaire à leur choix.

Le document EP-A-0 193 859 décrit un étau pour clés plates comportant un plateau inférieur et un plateau supérieur dont la partie périphérique des bases en regard collabore à la façon de mâchoires pour serrer une partie longitudinale d'un panneton de clés plates tout en laissant accessible l'autre partie longitudinale du panneton, la forme desdites mâchoires étant différente sur deux faces de la base.

Afin de pallier le manque de commodité des étaux traditionnels, la présente invention propose un étau universel pour clés plates comportant un plateau inférieur et un plateau supérieur dont la partie périphérique des bases en regard collabore à la façon de mâchoires pour serrer une partie longitudinale d'un panneton de clés plates tout en laissant accessible l'autre partie longitudinale du panneton, caractérisé en ce que lesdites bases en regard sont hexagonales et en ce que la forme desdites mâchoires est différente sur chaque face de l'hexagone, chacune desdites formes desdites mâchoires étant compatible avec la section d'un type de panneton de clés plates particulier, les deux étaux sont assujettis sur une plaque mobile, un des étaux étant destiné à porter une ébauche et l'autre une clé-modèle de pannetons ayant des sections identiques, un palpeur venant détecter la forme des dents de la clé-modèle de sorte qu'un outil tranchant reproduise cette forme sur l'ébauche par translation de ladite plaque, chacun des deux étaux est assujetti sur ladite plaque mobile au moyen d'un écrou se vissant autour dudit arbre et s'encastrant dans ladite plaque, ledit écrou comportant six encoches dans le plan de symétrie de chaque face dudit hexagone, une des extrémités d'une tige traversant ladite plaque étant maintenue par des moyens élastiques à l'intérieur d'une desdites encoches, l'autre des extrémités de ladite tige est extérieure à ladite plaque et comporte une tête pour faciliter le dégagement manuel de ladite encoche lorsqu'un effort s'oppose auxdits moyens élastiques, ledit palpeur et ledit outil étant disposés d'un premier côté de la plaque, et lesdites têtes étant disposées d'un deuxième côté de la plaque opposé au premier côté, et chaque étau comporte des repères pour faciliter son positionnement selon le type de clé à travailler.

Sur une desdites faces de l'hexagone, ladite mâchoire est par exemple constituée par un rebord vertical sous ledit plateau supérieur et un prolongement horizontal dudit plateau inférieur et s'adapte à un panneton dont la partie longitudinale serrée est de section rectangulaire. Sur une autre face, ladite mâchoire peut aussi être constituée par une pointe verticale sous ledit plateau supérieur et une encoche sur ledit plateau inférieur et s'adapte à un panneton de section en lignes brisées. Sur encore une autre face, ladite mâchoire est éventuellement constituée par un rebord vertical sous ledit plateau supérieur comportant une première encoche et une seconde encoche identique à la première sur ledit plateau inférieur et s'adapte à un panneton de section en T, la première et la seconde encoches accueillant chacune une branche de la barre du T. Sur une dernière face, ladite mâchoire est le cas échéant constituée par un rebord vertical sous ledit plateau supérieur dont la base admet un profil en arc de cercle et un évidement en arc de cercle sur le plateau inférieur et s'adapte à un panneton cylindrique.

Avantageusement, un arbre cylindrique traverse de part en part ledit plateau supérieur et ledit plateau inférieur, ledit arbre étant rendu solidaire à une de ses extrémités dudit plateau inférieur au moyen d'une clavette tandis qu'à l'autre de ses extrémités, il se visse à l'intérieur d'une tête de poignée, une couronne à billes solidaire dudit plateau supérieur entourant ledit arbre entre ladite tête de poignée et ledit plateau supérieur et un ressort de rappel étant placé autour dudit arbre entre ladite couronne à billes et ledit plateau inférieur à l'intérieur de l'évidement du plateau supérieur qui reçoit ledit arbre, des moyens étant en outre prévus pour empêcher toute rotation du plateau supérieur autour de l'arbre. Il est alors préférable que ladite couronne à billes comporte un manchon occupant une partie dudit évidement du plateau supérieur qui reçoit ledit arbre et contre lequel s'appuie ledit ressort de rappel, ledit manchon étant rentré à force dans ledit plateau supérieur.

La présente invention est décrite plus en détail ci-dessous à l'aide d'un exemple de réalisation illustré par des dessins. Sur ces derniers :
- la figure 1 montre en perspective un mode de réalisation de l'étau universel pour clés plates selon la présente invention,
- la figure 2 est une vue de dessus de l'étau de la figure 1 avec une clé plate mise en place,
- la figure 3 présente l'étau des figures précédentes suivant la coupe AA définie sur la figure 2,
- les figues 4 précisent, grâce à un détail de la coupe de la figure 3, différents types de mâchoires adaptées à plusieurs sortes de clés et qui peuvent être portées par un même étau selon la présente invention,
- la figure 5 illustre en vue de dessus comment deux étaux selon la présente invention peuvent être utilisés pour reproduire les dents d'une clé plate sur une ébauche similaire,
- la figure 6 donne un détail de la coupe BB définie sur la figure 5,
- la figure 7 correspond à la coupe CC de la figure 6 sur laquelle la trace d'un étau selon la présente invention avec sa clé est reproduite en superposition.

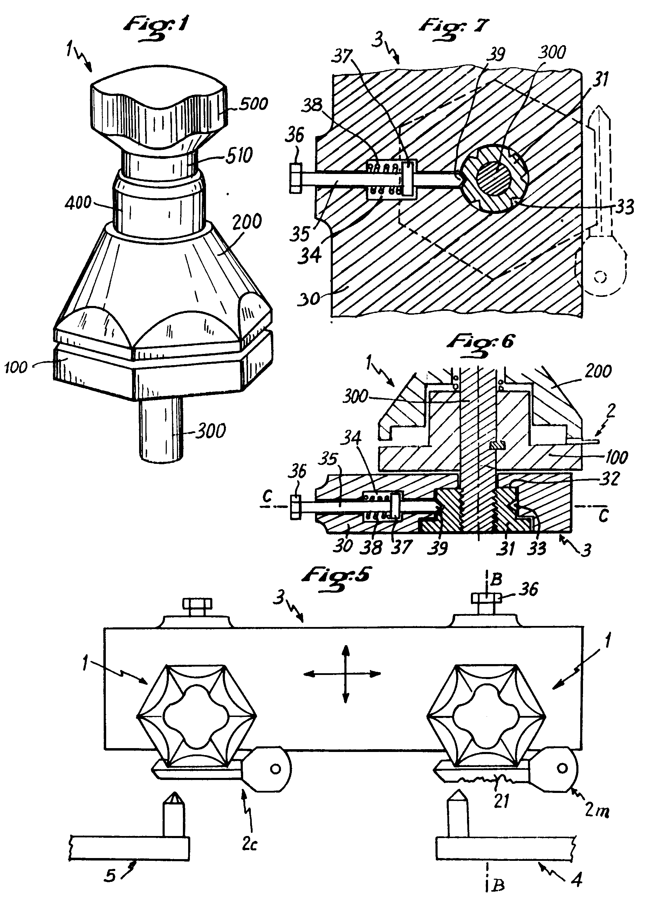

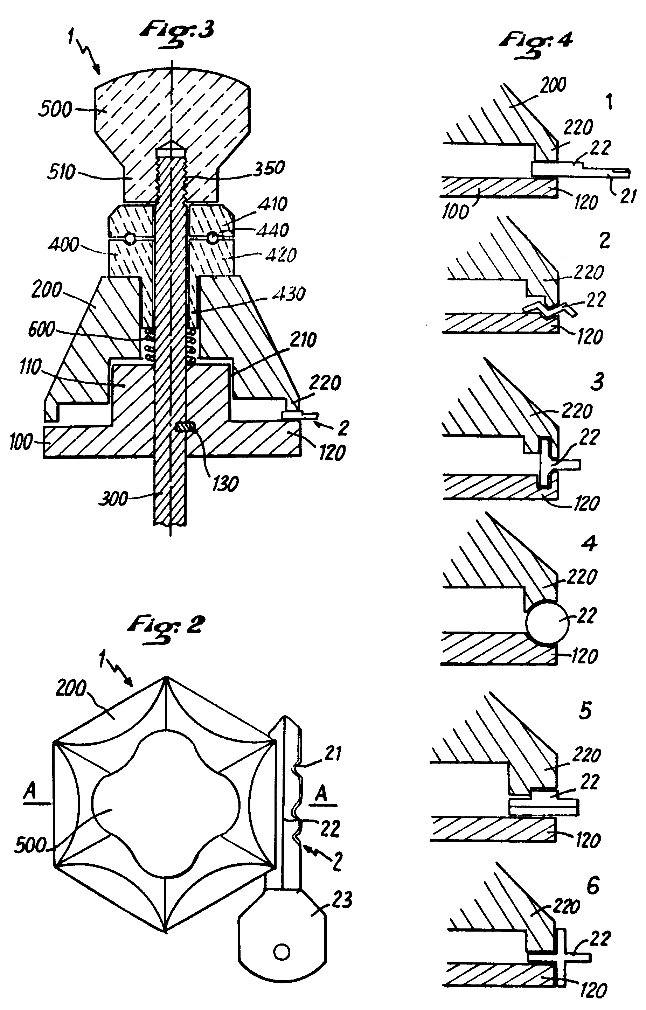

Une forme de réalisation avantageuse de la présente invention est montrée sur la figure 1. L'étau 1 correspondant admet une configuration cylindrique d'axe vertical. Plus précisément, il est constitué par un arbre 300 central, un plateau inférieur 100 de base hexagonale, un plateau supérieur 200 en forme de tronc de cône avec des pans coupés de sorte que sa base admet la même surface hexagonale que celle du plateau inférieur, une couronne à billes 400 et enfin une tête 500 en forme de poignée. En cours d'utilisation, le panneton d'une clé plate est placé horizontalement entre le plateau inférieur 100 et le plateau supérieur 200 comme il est indiqué sur la figure 2. Cette vue de dessus de l'étau précise en effet comment un peu moins de la moitié de la largeur du panneton 22 d'une clé 2 est pincé entre les deux plateaux. Ainsi la tête 23 de la clé 2 reste-t-elle à l'extérieur de l'étau de même que sa partie dentée 21.

La figure 3 permet de mieux comprendre le fonctionnement de l'étau 1. Sur cette coupe verticale dans le plan AA de la figure 2, apparaît en effet que l'arbre 300 traverse les deux plateaux ainsi que la couronne à billes 400 pour venir se raccorder au moyen d'un filetage extérieur 350 à un écrou 510 qui prolonge inférieurement la tête 500 de poignée. Il est par ailleurs rendu solidaire du plateau inférieur 100 au moyen d'une clavette 130. Entre ces deux points d'assujettissement de l'arbre 300, la couronne à billes 400 et le plateau supérieur 200 sont, quant à eux, libres de coulisser sur l'arbre 300. On conçoit, dans ces conditions, qu'en vissant la tête 500 de poignée, on provoque le resserrement des deux plateaux l'un vers l'autre.

Afin de rendre leur séparation automatique lorsque la tête 500 de poignée est au contraire dévissée, un ressort 600 de rappel est prévu. Celui-ci entoure l'arbre 300 et prend appui sur le plateau inférieur 100. Il s'appuie par ailleurs sur la base d'un manchon 430 qui prolonge inférieurement la couronne à billes 400. En outre le plateau supérieur 200 est rendu solidaire de ce manchon 430 ( par un emboîtement à force par exemple). Ainsi, pour peu qu'on permette son expansion, le ressort tend-il à éloigner non seulement la couronne à billes 400, mais aussi le plateau supérieur 200 du plateau inférieur 100.

Lors de la remontée de ces pièces; un pivotement du plateau supérieur 200 par rapport au plateau inférieur 100 doit toutefois être empêché. La suite de cette description fera apparaître la raison de cette précaution. Quoi qu'il en soit, le plateau inférieur 100 présente dans ce but une masse 110 de matière faisant saillie vers le haut. Celle-ci a la forme d'un parallélépipède décentré par rapport à l'axe de l'étau 1. Un évidement 210 complémentaire de cette masse 110 est ménagé dans la partie inférieure du plateau supérieur 200. La masse 110 s'emboîte en outre dans l'évidement 210 sur une hauteur importante par rapport à la course de l'écrou 510. Ainsi, le dévissage de la tête 500 de poignée en vue de libérer la clé 2 ne se traduit-il jamais par la désolidarisation des deux plateaux vis-à-vis de leur mouvement rotatif autour de l'axe de l'étau 1.

Cette disposition permet enfin de comprendre l'utilité de la couronne à billes 400. Le lit de billes 440 qu'elle renferme, autorise en effet le serrage de la tête 500 de poignée contre la partie supérieure 410 de la couronne sans que des efforts de torsion ne soient transmis au niveau de l'emboîtement de la masse 110 faisant saillie sur le plateau inférieur 100 et de l'évidement 210 de la partie inférieure du plateau supérieur 200.

S'il est si impérieux que les deux plateaux ne tournent jamais l'un par rapport à l'autre, c'est qu'ils portent à la périphérique de leurs faces en regard des mâchoires 120 et 220 destinées à recevoir différentes sortes de panneton de clés. Chaque face de l'hexagone est en effet dévolue à une section de panneton précise. La figure 4 indique, à l'aide d'un détail de la coupe représentée sur la figure 3, les six sections de panneton 22 qu'un étau 1 pourrait par exemple accueillir. Sur la figure 4-1, il s'agit d'une clé plate de type très courant présentant une brusque réduction d'épaisseur du côté 21 où les dents sont usinées. Le bord de la face de l'hexagone correspondant se contente alors de mâchoires simples, par exemple un rebord 220 vertical sous le plateau supérieur 200 et un prolongement horizontal 120 du plateau inférieur 100.

La même forme de mâchoires peut être retenue pour des pannetons en croix (voir figure 4-6) bien que la distance verticale entre les plateaux serrés doive être adaptée à l'épaisseur d'une des branches de la croix. Plus complexe est le profil de mâchoires recevant un panneton en lignes brisées (voir figure 4-2). Le rebord 220 vertical du plateau supérieur 200 comporte alors avantageusement une pointe et le plateau inférieur 100, une encoche complémentaire de la pointe de sorte qu'elles collaborent pour prendre en sandwich un angle de la ligne brisée.

Pour les pannetons en T, il est préférable que les deux mâchoires en regard comportent chacune une encoche destinée à accueillir une branche de la barre supérieure du T (voir figure 4-3). De même les pannetons cylindriques trouvent avantage à être pincés entre des mâchoires profilées en arc de cercle (voir figure 4-4). Enfin de nouvelles clés faites de deux plaques collées l'une sur l'autre, l'une des plaques présentant une nervure extérieure, peuvent être assujetties entre un rebord 220 muni d'un décrochement complémentaire à la nervure et un prolongement lisse 120 du plateau inférieur 100 (voir figure 4-5). Bien d'autres profils de mâchoires sont évidemment envisageables en fonction d'autres types de clé non envisagés ici.

L'étau 1 qui vient d'être décrit, est avantageusement utilisé pour reproduire les dents d'une clé-modèle sur une ébauche dont les pannetons sont identiques. Selon la figure 5, cela peut être réalisé en fixant deux étaux 1 selon la présente invention sur une plaque 3 mobile. L'un des étaux porte alors la clé-modèle 2m de sorte qu'il présente sa partie dentée 21 parallèlement au bord de la plaque 3 à portée d'un palpeur 4. L'autre étau enserre l'ébauche 2c de la même manière pour l'exposer aux attaques d'un outil tranchant 5. En fonction des informations recueillies par le palpeur 4, la plaque 3 est translatée parallèlement aux pannetons ou perpendiculairement afin que l'outil tranchant 5 reproduise les dents sur l'ébauche 2c qui devient ainsi une copie de la clé-modèle 2m.

Pour que ce système fonctionne correctement, il convient que chaque étau 1 soit fixé convenablement à la plaque 3. La figure 6 montre comment cela peut avantageusement être réalisé au moyen d'un écrou 31 qui se visse à la base de l'arbre 300 de l'étau 1. Cet écrou 31 se loge en effet dans un évidement 32 de la plaque 3. Lorsque l'étau 1 est ainsi assujetti à la plaque 3, il convient toutefois d'autoriser la rotation de son arbre 300 afin de choisir la face de l'hexagone qui porte la clé à copier ou à usiner. Une tige 35 est prévue à cet effet. Celle-ci dépasse, d'un côté, à l'extérieur de la plaque 3 et est munie d'une tête 36 facilitant sa manipulation. A son autre extrémité, elle présente une pointe 39 qui peut pénétrer dans une encoche 33 de l'écrou 31 et le bloquer ainsi à la manière d'une clavette. L'écrou 31 porte en fait six encoches placées en regard de chaque face de l'hexagone (cf. figure 7). La tige 35 traverse par ailleurs la plaque 3 où un évidement cylindrique complémentaire comporte un élargissement 34 pour accueillir en outre un ressort 38 entourant la tige 35. Le ressort 38 prend appui sur un côté de cet élargissement 34 ainsi que sur une bague 37 solidaire de la tige 35 de sorte qu'il tend toujours à maintenir la pointe 39 de la tige 35 au sein de l'encoche 33 de l'écrou 31. L'étau se déverrouille alors de la position choisie en tirant sur la tête 36. Il est avantageux de prévoir des repères sur l'étau 1 afin de faciliter son positionnement selon le type de clé à travailler.

## Revendications

1. Dispositif universel de reproduction de clés plates, comportant deux étaux universels pour clés plates comportant chacun un plateau inférieur (100) et un plateau supérieur (200) dont la partie périphérique (120, 220) des bases en regard collabore à la façon de mâchoires pour serrer une partie longitudinale d'un panneton (22) de clés plates tout en laissant accessible l'autre partie longitudinale du panneton (22), caractérisé en ce que lesdites bases en regard sont hexagonales et en ce que la forme desdites mâchoires est différente sur chaque face de l'hexagone, chacune desdites formes desdites mâchoires étant compatible avec la section d'un type de panneton (22) de clés plates particulier, les deux étaux sont assujettis sur une plaque mobile (3), un des étaux étant destiné à porter une ébauche (2c) et l'autre une clé-modèle (2m) de pannetons ayant des sections identiques, un palpeur (4) venant détecter la forme des dents (21) de la clé-modèle (2m) de sorte qu'un outil tranchant (5) reproduise cette forme sur l'ébauche (2c) par translation de ladite plaque (3), chacun des deux étaux est assujetti sur ladite plaque mobile (3) au moyen d'un écrou (31) se vissant autour d'un arbre (300) et s'encastrant dans ladite plaque, ledit écrou (31) comportant six encoches (33) dans le plan de symétrie de chaque face dudit hexagone, une des extrémités (39) d'une tige (35) traversant ladite plaque (3) étant maintenue par des moyens élastiques (38) à l'intérieur d'une desdites encoches (33), l'autre des extrémités de ladite tige (35) est extérieure à ladite plaque (3) et comporte une tête (36) pour faciliter le dégagement manuel de ladite encoche lorsqu'un effort s'oppose auxdits moyens élastiques (38), ledit palpeur (4) et ledit outil (5) étant disposés d'un premier côté de la plaque (3), et lesdites têtes (36) étant disposées d'un deuxième côté de la plaque (3) opposé au premier côté, et chaque étau comporte des repères pour faciliter son positionnement selon le type de clé à travailler.

2. Dispositif selon la revendication 1, caractérisé en ce que, sur une desdites faces de l'hexagone, ladite mâchoire est constituée par un rebord vertical (220) sous ledit plateau supérieur (200) et un prolongement horizontal (120) dudit plateau inférieur (100) et s'adapte à un panneton (22) dont la partie longitudinale serrée est de section rectangulaire.

3. Dispositif selon la revendication 1, caractérisé en ce que, sur une desdites faces de l'hexagone, ladite mâchoire est constituée par une pointe verticale (220) sous ledit plateau supérieur (200) et une encoche (120) sur ledit plateau inférieur (100) et s'adapte à un panneton (22) de section en lignes brisées.

4. Dispositif selon la revendication 1, caractérisé en ce que, sur une desdites faces de l'hexagone, ladite mâchoire est constituée par un rebord vertical (220) sous ledit plateau supérieur (200) comportant une première encoche et une seconde encoche identique à la première sur ledit plateau inférieur (100) et s'adapte à un panneton (22) de section en T, la première et la seconde encoches accueillant chacune une branche de la barre du T.

5. Dispositif selon la revendication 1, caractérisé en ce que, sur une desdites faces de l'hexagone, ladite mâchoire est constituée par un rebord vertical (220) sous ledit plateau supérieur (200) dont la base admet un profil en arc de cercle et un évidement en arc de cercle sur le plateau inférieur (100) et s'adapte à un panneton (22) cylindrique.

6. Dispositif selon la revendication 1, caractérisé en ce qu'un arbre cylindrique (300) traverse de part en part ledit plateau supérieur (200) et ledit plateau inférieur (100), ledit arbre (300) étant rendu solidaire à une de ses extrémités dudit plateau inférieur (100) au moyen d'une clavette (130) tandis qu'à l'autre de ses extrémités, il se visse à l'intérieur d'une tête de poignée (500), une couronne à billes (400) solidaire dudit plateau supérieur (200) entourant ledit arbre (300) entre ladite tête de poignée (500) et ledit plateau supérieur (200), un ressort de rappel (600) étant placé autour dudit arbre (300) entre ladite couronne à billes (400) et ledit plateau inférieur (100) à l'intérieur de l'évidement du plateau supérieur (200) qui reçoit ledit arbre (300), des moyens (110, 210) étant en outre prévus pour empêcher toute rotation du plateau supérieur (200) autour de l'arbre (300).

7. Dispositif selon la revendication 6, caractérisé en ce que ladite couronne à billes (400) comporte un manchon (430) occupant une partie dudit évidement du plateau supérieur (200) qui reçoit ledit arbre (300) et contre lequel s'appuie ledit ressort de rappel (600), ledit manchon (430) étant rentré à force dans ledit plateau supérieur (200).

## Claims

1. A universal device for reproducing flat keys, comprising two universal vices for flat keys each comprising a lower platform (100) and an upper platform (200), in which the peripheral portions (120, 220) of the facing bases cooperate in the manner of jaws in order to clamp one longitudinal portion of a flat key bit (22) while leaving the other longitudinal portion of the key bit (22) accessible, characterised in that said facing bases are hexagonal and in that the form of said jaws is different on each face of the hexagon, each of said forms of said jaws being compatible with the section of one particular type of flat key bit (22), the two vices are fixed to a movable plate (3), one of the vices being intended to carry a blank (2c) and the other a model key (2m) of key bits having identical sections, a feeler (4) detecting the shape of the teeth (21) of the model key (2m) such that a cutting tool (5) reproduces this shape on the blank (2c) by the translation of said plate (3), each of the two vices is fixed to said movable plate (3) by means of a nut (31) screwed on around a shaft (300) and being embedded in said plate, said nut (31) comprising six notches (33) in the plane of symmetry of each face of said hexagon, one of the ends (39) of a rod (35) passing through said plate (3) being held by resilient means (38) inside one of said notches (33), the other end of said rod (35) is outside said plate (3) and comprises a head (36) to facilitate manual release from said notch when an effort is made in opposition to said resilient means (38), said feeler (4) and said tool (5) being arranged on a first side of the plate (3), and said heads (36) being arranged on a second side of the plate (3) opposite the first side, and each vice comprises markers to facilitate its positioning according to the type of key to be worked on.

2. A device according to Claim 1, characterised in that, on one of said faces of the hexagon, said jaw consists of a vertical flange (220) below said upper platform (200) and a horizontal elongation (120) of said lower platform (100) and fits a key bit (22), the clamped longitudinal portion of which has a rectangular section.

3. A device according to Claim 1, characterised in that, on one of said faces of the hexagon, said jaw consists of a vertical tip (220) below said upper platform (200) and a notch (120) on said lower platform (100) and fits a key bit (22) with a zigzag section.

4. A device according to Claim 1, characterised in that, on one of said faces of the hexagon, said jaw consists of a vertical flange (220) below said upper platform (200) comprising a first notch and a second notch, identical to the first, on said lower platform (100) and fits a key bit (22) with a T-shaped section, the first and the second notches each receiving a branch of the bar of the T.

5. A device according to Claim 1, characterised in that, on one of said faces of the hexagon, said jaw consists of a vertical flange (220) below said upper platform (200), the base of which accepts a profile shaped like the arc of a circle and a recess shaped like the arc of a circle on the lower platform (100) and fits a cylindrical key bit (22).

6. A device according to Claim 1, characterised in that a cylindrical shaft (300) passes all the way through said upper platform (200) and said lower platform (100), said shaft (300) being made integral at one of its ends with said lower platform (100) by means of a cotter (130) while, at its other end, it is screwed inside the head of a handle (500), a ball-bearing crown (400) integral with said upper platform (200) surrounding said shaft (300) between said head of the handle (500) and said upper platform (200), a return spring (600) being placed around said shaft (300) between said ball-bearing crown (400) and said lower platform (100) inside the recess of the upper platform (200) which receives said shaft (300), means (110, 210) being provided furthermore to prevent any rotation of the upper platform (200) around the shaft (300).

7. A device according to Claim 6, characterised in that said ball-bearing crown (400) comprises a sleeve (430) occupying a portion of said recess in the upper platform (200) which receives said shaft (300) and against which said return spring (600) bears, said sleeve (430) being forced inside said upper platform (200).

## Patentansprüche

1. Universalvorrichtung zur Nachbildung von Flachschlüsseln, mit zwei Universalschraubstöcken für Flachschlüssel, die je eine untere Platte (100) und eine obere Platte (200) aufweisen, bei denen der periphere Bereich (120, 220) der einander gegenüberliegenden Basen in der Art von Klemmbacken zusammenwirkt, um einen Längsbereich eines Schlüsselbarts (22) von Flachschlüsseln einzuklemmen, während der andere Längsbereich des Schlüsselbarts (22) zugänglich bleibt, dadurch gekennzeichnet, daß die einander gegenüberliegenden Basen sechseckig sind und daß die Form der Klemmbacken auf jeder Seite des Sechsecks unterschiedlich ist, wobei jede der Formen der Klemmbacken mit dem Querschnitt einer bestimmten Art von Schlüsselbart (22) von Flachschlüsseln kompatibel ist, wobei die beiden Schraubstöcke auf einer beweglichen Platte (3) befestigt sind und einer der Schraubstöcke dazu bestimmt ist, einen Rohling (2c) zu tragen, während der andere einen Modellschlüssel (2m) von Schlüsselbärten mit identischen Querschnitten trägt, wobei ein Fühler (4) die Form der Zähne (21) des Modellschlüssels (2m) abtastet, damit ein Schneidewerkzeug (5) diese Form durch Verschiebung der Platte (3) auf dem Rohling (2c) reproduziert, wobei jeder der beiden Schraubstöcke auf der beweglichen Platte (3) mittels einer Mutter (31) befestigt ist, die sich um eine Welle (300) schraubt und sich in die Platte einfügt, wobei die Mutter (31) sechs Kerben (33) in der Symmetrieebene jeder Seite des Sechsecks aufweist, wobei eines der Enden (39) einer die Platte (3) durchquerenden Stange (35) durch elastische Mittel (38) im Inneren einer der Kerben (33) gehalten wird, während das andere Ende dieser Stange (35) außerhalb der Platte (3) liegt und einen Kopf (36) aufweist, um das manuelle Freisetzen der Kerbe zu erleichtern, wenn eine Kraft sich den elastischen Mitteln (38) widersetzt, wobei der Fühler (4) und das Werkzeug (5) auf einer ersten Seite der Platte (3) und die Köpfe (36) auf einer zweiten Seite der Platte (3) entgegengesetzt zur ersten Seite angeordnet sind und jeder Schraubstock Markierungen aufweist, um seine Positionierung je nach der Art des zu bearbeitenden Schlüssels zu erleichtern.

2. Vorrichtung nach Anspruch 1, dadurch gekennzeichnet, daß auf einer der Seiten des Sechsecks die Klemmbacke aus einem senkrechten Rand (220) unter der oberen Platte (200) und einer waagrechten Verlängerung (120) der unteren Platte (100) besteht und sich an einen Schlüsselbart (22) anpaßt, dessen eingeklemmter Längsbereich einen rechteckigen Querschnitt aufweist.

3. Vorrichtung nach Anspruch 1, dadurch gekennzeichnet, daß auf einer der Seiten des Sechsecks die Klemmbacke aus einer senkrechten Spitze (220) unter der oberen Platte (200) und einer Kerbe (120) auf der unteren Platte (100) besteht und sich an einen Schlüsselbart (22) eines Querschnitts in Zickzackform anpaßt.

4. Vorrichtung nach Anspruch 1, dadurch gekennzeichnet, daß auf einer der Seiten des Sechsecks die Klemmbacke aus einem eine erste Kerbe aufweisenden senkrechten Rand (220) unter der oberen Platte (200) und einer zweiten Kerbe identisch mit der ersten auf der unteren Platte (100) besteht und sich an einen Schlüsselbart (22) mit T-förmigem Querschnitt anpaßt, wobei die erste und die zweite Kerbe je einen Zweig des Querbalkens des T aufnehmen.

5. Vorrichtung nach Anspruch 1, dadurch gekennzeichnet, daß auf einer der Seiten des Sechsecks die Klemmbacke aus einem senkrechten Rand (220) unter der oberen Platte (200), dessen Basis ein kreisbogenförmiges Profil aufweist, und einer kreisbogenförmige Aushöhlung auf der unteren Platte (100) besteht und sich an einen zylindrischen Schlüsselbart (22) anpaßt.

6. Vorrichtung nach Anspruch 1, dadurch gekennzeichnet, daß eine zylindrische Welle (300) die obere Platte (200) und die untere Platte (100) durchdringt, wobei die Welle (300) an einem ihrer Enden an der unteren Platte (100) mittels eines Keils (130) befestigt wird, während sie an ihrem anderen Ende ins Innere eines Griffkopfs (500) eingeschraubt ist, wobei ein fest mit der oberen Platte (200) verbundener Kugelkranz (400) die Welle (300) zwischen dem Griffkopf (500) und der oberen Platte (200) umgibt, wobei eine Rückholfeder (600) um die Welle (300) zwischen dem Kugelkranz (400) und der unteren Platte (100) im Inneren der Aushöhlung der oberen Platte (200), die die Welle (300) aufnimmt, angeordnet ist, wobei außerdem Mittel (110, 210) vorgesehen sind, um jede Drehung der oberen Platte (200) um die Welle (300) zu verhindern.

7. Vorrichtung nach Anspruch 6, dadurch gekennzeichnet, daß der Kugelkranz (400) eine Muffe (430) aufweist, die einen Teil der die Welle (300) aufnehmenden Aushöhlung der oberen Platte (200) ausfüllt und gegen die sich die Rückholfeder (600) anlegt, wobei die Muffe (430) mit Zwang in die obere Platte (200) eingeführt wird.
